# FASCICULE DE BREVET EUROPEEN

(11) **EP 3 674 607 B1**
(45) Date de publication et mention de la délivrance du brevet: **14.04.2021**
(21) Numéro de dépôt: 19200231.9
(22) Date de dépôt: 27.09.2019
(51) Int. Cl.: F23L 1/02, F23L 9/06, F23L 13/06, F23N 3/00, F23N 3/04, F23N 5/02, F23N 5/24, F23B 60/02, F23G 7/10, F24B 5/02

(54) **MÉCANISME D'ADMISSION D'AIR DANS LA CHAMBRE DE COMBUSTION D'UN BRÛLEUR POUR COMBUSTIBLE SOLIDE À TIRAGE NATUREL**
MECHANISMUS ZUR LUFTZUFUHR IN DIE BRENNKAMMER EINES BRENNERS FÜR FESTBRENNSTOFF MIT NATÜRLICHEM ZUG
MECHANISM FOR AIR INTAKE IN THE COMBUSTION CHAMBER OF A BURNER FOR SOLID FUEL WITH NATURAL DRAFTING

(30) Priorité: 16.10.2018 BE 201805709
(43) Date de publication de la demande: 01.07.2020
(73) Titulaire: NEW BODART & GONAY, 4650 Herve (BE)
(72) Inventeur: LEGRAND, Matthieu, 4920 Harzé (BE)
(74) Mandataire: Pecher, Nicolas

(56) Documents cités:
- EP-A2- 1 589 285
- FR-A1- 2 413 613
- US-A- 5 553 604
- US-A1- 2009 260 553
- US-A1- 2012 312 204

## Description

### Domaine de l'invention

L'invention se rapporte à un mécanisme d'admission d'air dans la chambre de combustion d'un brûleur de combustible solide à tirage naturel, tel qu'un foyer à bois ou un poêle à bois.

### Description de l'art antérieur

Le document US 2009/0260553 décrit un dispositif et un procédé de contrôle de l'alimentation en air d'une chambre de combustion d'un foyer à bois ou à pellets. La paroi inférieure de la chambre de combustion est munie d'au moins une ouverture d'alimentation pour l'air de combustion. Un clapet d'obturation est monté coulissant à la surface inférieure de ladite paroi de la chambre de combustion de manière à recouvrir l'ouverture d'alimentation en air. Le clapet présente au moins une ouverture formée dans celle-ci de manière à pouvoir coulisser entre une première position où l'ouverture d'alimentation de la chambre de combustion est ouverte et une seconde position où elle est fermée par le clapet. Un moyen de sollicitation, tel qu'un ressort hélicoïdal, est présent et exerce une force de rappel sur le clapet tendant à le déplacer vers sa seconde position (position fermée). Le mouvement du clapet généré par le moyen de sollicitation est ralenti par la présence d'un moyen de ralentissement. La vitesse de transition entre la position ouverte et fermée est ainsi modulée suivant les propriétés mécaniques des moyens de sollicitation et de ralentissement en vue d'obtenir un flux d'air entrant décroissant adapté au procédé de combustion. Une fois le clapet arrivé en bout de course (position fermée), il peut être ramené à sa position initiale (position ouverte) automatiquement ou manuellement suivant les modes de réalisation. Ce genre de dispositif de l'art antérieur met en œuvre un procédé d'admission d'air qui est rigide, car il ne prend pas en compte les attentes de l'utilisateur en matière de température de combustion et ne s'adapte pas aux conditions réelles à l'intérieur de la chambre de combustion, qui peuvent différer à chaque utilisation suivant la quantité et la qualité du bois introduit dans la chambre de combustion. Par ailleurs, ce dispositif n'est pas conçu pour entrer instantanément dans une position de sécurité dans laquelle le clapet serait en position fermée, en cas de coupure de courant de l'habitation dans laquelle le foyer à bois est installé par exemple.

Le document US2018/0051885 décrit un mécanisme d'admission d'air dans un brûleur domestique de combustible solide, tel qu'un foyer ou un poêle à bois. Dans ce mécanisme, deux bras pivotables motorisés sont prévu pour alterner entre une position dans laquelle les entrées d'air primaire et secondaire de la chambre de combustion sont totalement ouvertes et une position où elles sont partiellement closes. Le mécanisme est cependant fort complexe et implique de multiples pièces mobiles.

Le document US 5,553,604 décrit un dispositif de chauffage, tel qu'un poêle à bois, comprenant une chambre de combustion qui présente des ouvertures en forme de fente. Un volet coulissant comprenant des ouvertures similaires à celles de la chambre de combustion est prévu et peut être actionné en translation par un moteur, de manière à faire varier le chevauchement entre les ouvertures de la chambre de combustion et celles du clapet. Dans ce dispositif, aucun mécanisme pour faire entrer le clapet dans une position de sécurité n'est cependant prévu.

Le document US 2012/0312204 divulgue un gazéificateur de biomasse ayant un brûleur avec une chambre de combustion. La chambre de combustion comprend une paroi munie d'un clapet coulissant. La paroi et le clapet comprennent respectivement des ouvertures pouvant se chevaucher sous l'action d'un moteur actionnant le clapet coulissant. Le moteur est connecté opérationnellement à un contrôleur électronique qui peut être configuré pour réguler dynamiquement l'admission d'air dans la chambre de combustion, en faisant varier le degré de chevauchement entre les ouvertures de paroi et de clapet. Dans ce dispositif, aucun mécanisme pour faire entrer le clapet dans une position de sécurité n'est cependant prévu.

### Résumé de l'invention

Un objet de l'invention est de fournir un mécanisme robuste et durable pour l'admission d'air dans la chambre de combustion d'un brûleur de combustibles solides, ledit mécanisme étant apte à réguler l'admission d'air en fonction de paramètres variables provenant par exemple de sondes de température ou d'une interface homme-machine.

Un autre objet de l'invention est de fournir un mécanisme pour l'admission d'air dans la chambre de combustion d'un brûleur de combustibles solides apte à entrer dans une position de sécurité dans laquelle l'admission d'air est réduite ou totalement interrompue en cas de coupure de courant.

La présente invention est définie dans la revendication indépendante annexée. Des modes de réalisation préférés sont définis dans les revendications dépendentes.

Selon un premier aspect, l'invention se rapporte à un mécanisme d'admission d'air pour la chambre de combustion d'un brûleur de combustible solide à tirage naturel, tel qu'un foyer à bois ou un poêle à bois, comprenant :
- une paroi, qui en position de montage fait partie de la chambre de combustion, comprenant une face interne et une face externe, ladite paroi de chambre de combustion comprenant au moins une ouverture de paroi ;
- un clapet pour la fermeture de ladite paroi de chambre de combustion, ledit clapet comprenant au moins une ouverture de clapet et étant positionné contre la face externe de ladite paroi de chambre de combustion, ledit clapet étant mobile en translation selon un axe Z parallèle à ladite face externe de manière à faire varier le chevauchement entre l'ouverture de clapet et l'ouverture de paroi ;
- un moteur électrique pour déplacer le clapet selon l'axe Z et faire varier le chevauchement entre la au moins une ouverture de clapet et la au moins une ouverture de paroi ;
- un contrôleur électronique, ledit contrôleur électronique étant connecté opérationnellement audit moteur électrique ;
Suivant l'invention, le mécanisme d'admission d'air comprend en outre
- un électroaimant ;
- une plaquette métallique.
Suivant l'invention, également,
(i) l'un de l'électroaimant et de la plaquette métallique est une partie motorisée et l'autre est une partie passive, la partie motorisée étant apte à être déplacée en translation selon l'axe Z par rapport à la partie passive et à la paroi de la chambre de combustion, par un moteur électrique couplé mécaniquement à la paroi de la chambre de combustion;
(ii) la partie passive est mobile en translation selon une plage de positions le long de l'axe Z par rapport à la paroi de la chambre de combustion et à la partie motorisée, la partie passive étant mécaniquement couplée audit clapet;
(iii) des moyens résilients exerçant une force de répulsion selon l'axe Z entre la partie motorisée et la partie passive sont présents, lesdits moyens résilients étant configurés pour, en l'absence de courant dans l'électroaimant, maintenir la partie passive dans une position de sécurité dans laquelle il n'y a pas de chevauchement entre l'au moins une ouverture de clapet et ladite au moins une première ouverture de paroi, quelle que soit la position de la partie motorisée selon l'axe Z;
(iv) la partie passive peut être mécaniquement couplée à la partie motorisée par attraction magnétique lorsque la partie motorisée est déplacée contre les moyens résilients vers la partie passive par le moteur électrique et qu'un courant circule dans l'électroaimant, de manière à ce qu'après le couplage mécanique entre la partie passive et la partie motorisée, le chevauchement entre l'au moins une ouverture de paroi et l'au moins une ouverture de clapet peut être varié sous l'action du moteur électrique;
(v) ledit contrôleur électronique est connecté opérationnellement à l'électroaimant, ledit contrôleur étant configuré pour mettre en œuvre un mode d'initialisation du mécanisme d'admission d'air dans lequel la partie motorisée est déplacée par le moteur électrique vers la partie passive contre les moyens résilients et l'électroaimant est simultanément alimenté en courant, de manière à réaliser le couplage mécanique entre la partie motorisée et la partie passive.

Selon un mode de réalisation avantageux, la paroi de chambre de combustion comprend au moins une première ouverture de paroi pour l'admission d'air de grille et au moins une seconde ouverture de paroi pour l'admission d'air primaire, ledit clapet comprenant au moins une première ouverture de clapet et au moins une seconde ouverture de clapet, et
(i) le chevauchement entre ladite première ouverture de paroi et ladite première ouverture de clapet est une fonction monotone de la position du clapet le long de l'axe Z par rapport à la paroi de chambre de combustion, ladite fonction variant entre une valeur de chevauchement maximal et une valeur nulle, ladite fonction passant de ladite valeur de chevauchement maximal à la valeur nulle sur une première plage de positions (I-II) du clapet le long de l'axe Z,
(ii) le chevauchement entre ladite seconde ouverture de paroi et ladite seconde ouverture de clapet est une fonction monotone de la position du clapet le long de l'axe Z par rapport à la paroi de chambre de combustion, ladite fonction variant entre une valeur de chevauchement maximal et une valeur nulle, ladite fonction passant de ladite valeur de chevauchement maximal à la valeur nulle sur une seconde plage de positions (II-IV) du clapet le long de l'axe Z,
(iii) ladite première et ladite seconde plage de positions ne se chevauchent pas,
(iv) en position de sécurité, il n'y a pas de chevauchement entre les ouvertures de paroi et les ouvertures de clapet.

Selon un mode de réalisation avantageux, la paroi de chambre de combustion comprend un passage pour l'admission d'air secondaire, et
(i) le clapet est configuré de telle manière que le degré d'ouverture dudit passage est une fonction monotone de la position du clapet le long de l'axe Z par rapport à la paroi de chambre de combustion, ladite fonction variant entre une valeur d'ouverture minimale et une valeur d'ouverture maximale, ladite fonction passant de ladite valeur d'ouverture minimale à la valeur maximale sur une troisième plage de positions (I-IV) du clapet le long de l'axe Z, ladite troisième plage de positions (I-IV) englobant lesdites première et seconde plages de positions,
(ii) en position de sécurité, le degré d'ouverture dudit passage est à sa valeur maximale.

Selon un mode de réalisation avantageux, la paroi de la chambre de combustion comprend une pluralité de premières ouvertures de paroi pour l'admission d'air de grille et le clapet comprend une pluralité de premières ouvertures de clapet, dans lequel le chevauchement mutuel entre lesdites ouvertures de paroi et lesdites ouvertures de clapet peut être varié par un mouvement de translation du clapet selon l'axe Z.

Selon un mode de réalisation avantageux, le contrôleur électronique actionne le moteur électrique pour réguler l'admission d'air à travers le mécanisme d'admission d'air en fonction de paramètres de fonctionnement, lesdits paramètres de fonctionnement étant (i) pré-enregistrés dans ledit contrôleur électronique et/ou (ii) reçus en entrée de capteurs connectés audit contrôleur électronique et/ou d'une interface homme-machine dudit contrôleur électronique.

Selon un mode de réalisation avantageux, le contrôleur électronique est un contrôleur PID recevant en entrée une température de consigne provenant d'une interface homme-machine, des données provenant d'un capteur de température dans la chambre de combustion et des données provenant d'un capteur détectant les états d'ouverture et de fermeture d'une porte de la chambre de combustion.

Selon un mode de réalisation avantageux, le moteur électrique est configuré pour entrainer en rotation un arbre fileté, ladite partie motorisée comprenant un écrou vissé autour dudit arbre fileté.

Selon un mode de réalisation avantageux, les moyens résilients comprennent deux ressorts hélicoïdaux configurés pour fonctionner en compression lorsque ladite partie motorisée est déplacée vers ladite partie passive.

Selon un mode de réalisation avantageux, les moyens résilients comprennent deux ressorts hélicoïdaux configurés pour fonctionner en compression lorsque ladite partie motorisée est déplacée vers ladite partie passive.

Selon un mode de réalisation avantageux, l'électroaimant est la partie entraînée par moteur et la plaquette métallique est la partie passive.

Selon un second aspect, l'invention se rapporte également à une chambre de combustion d'un brûleur de combustible solide à tirage naturel, tel qu'un foyer à bois ou un poêle à bois, comprenant un mécanisme d'admission d'air selon l'invention.

### Brève description des figures

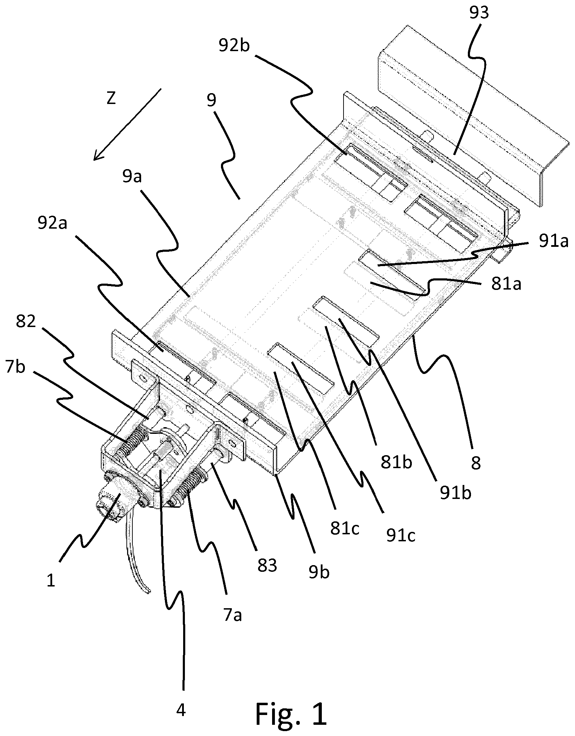

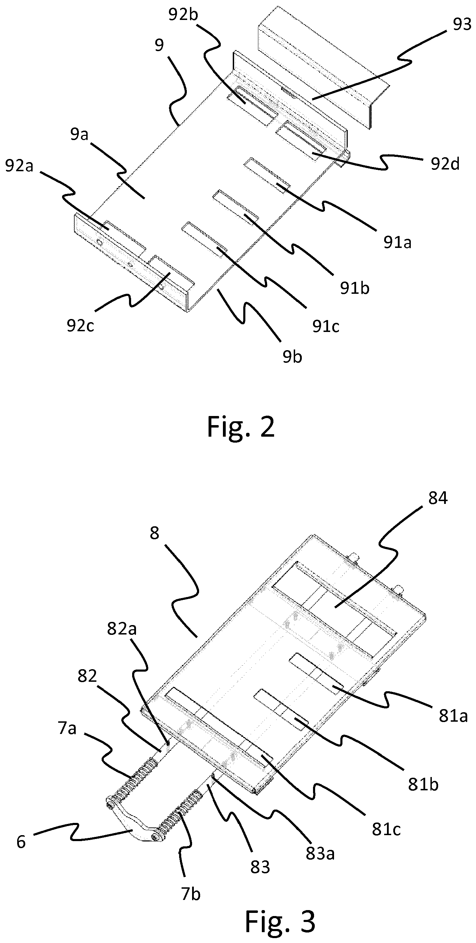

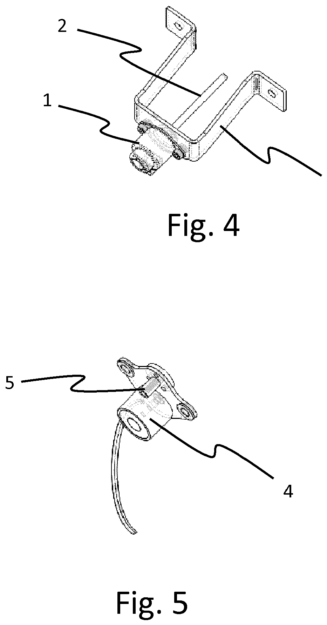

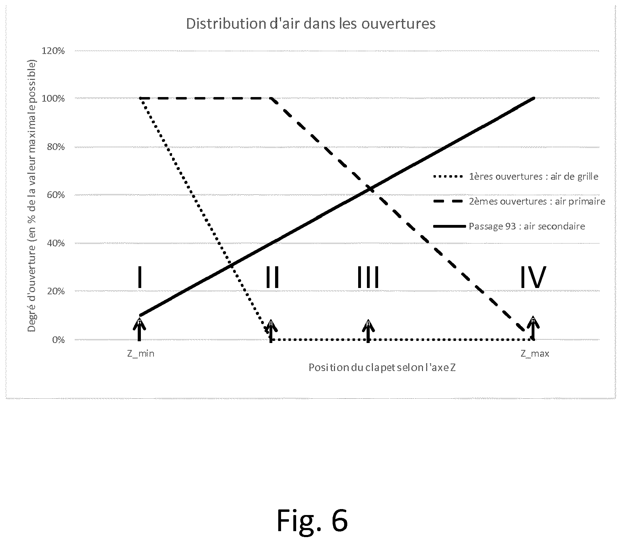

Ces aspects de l'invention et d'autres aspects complémentaires seront expliqués plus en détails au moyen d'exemples et par référence au dessin annexé :
**La** **Figure 1** représente un exemple de mécanisme selon l'invention ;
**La** **Figure 2** représente un exemple de paroi d'une chambre de combustion pour un mécanisme selon l'invention ;
**La** **Figure 3** représente un exemple de clapet pour un mécanisme selon l'invention ;
**La** **Figure 4** représente un exemple de moteur et ses moyens d'attache à la chambre de combustion pour un mécanisme selon l'invention ;
**La** **Figure 5** représente un exemple de moteur et ses moyens d'attache à la chambre de combustion pour un mécanisme selon l'invention ;
**La** **Figure 6** représente un exemple de graphe du degré d'ouverture des différentes ouvertures de paroi suivant la position du clapet pour un mécanisme selon l'invention ;
**Les Figures 7-10** représentent différentes positions dans un exemple de mécanisme selon l'invention ;
**La Figure 11** représente la position de sécurité dans un exemple de mécanisme selon l'invention ;
Les figures ne sont pas dessinées à l'échelle.

### Description détaillée de modes de réalisation préférés

La Figure 1 représente les éléments principaux d'un exemple de mécanisme d'admission d'air selon l'invention pour la chambre de combustion d'un brûleur de combustible solide à tirage naturel, tel qu'un foyer à bois ou un poêle à bois. Le mécanisme selon l'invention comprend une paroi 9 de chambre de combustion. A la Figure 1, la paroi 9 est avantageusement la paroi inférieure de la chambre de combustion, mais peut également être l'une des parois latérales dans d'autres modes de réalisation. Cette paroi comprend une face interne 9a, orientée vers l'intérieur de la chambre de combustion, et une face externe 9b. Dans cette paroi 9, au moins une ouverture pour l'admission d'air est présente. Aux Figures 1 et 2, différentes ouvertures de paroi 91a, 91b, 91c, 92a, 92b, 92c, 92d en forme de fente sont ainsi prévues.

Les ouvertures de paroi 91a, 91b, 91c peuvent donner directement accès à l'intérieur de la chambre de combustion. A la Figure 1, ces ouvertures, dites « premières ouvertures de paroi 91a, 91b, 91c » permettent le passage de « l'air de grille » dans une première terminologie, ou « air primaire » dans une seconde terminologie, qui est l'air acheminé sous le foyer et a une importance cruciale pour l'amorçage de la réaction de combustion. La chambre de combustion peut également comprendre d'autres ouvertures au niveau de la paroi 9. Ainsi, elle peut comprendre des ouvertures menant à des canaux conçus pour acheminer l'air à des hauteurs variées de la chambre de combustion. Aux Figures 1 & 2, la paroi 9 comprend des ouvertures 92a, 92b, 92c, 92d, dites « secondes ouvertures de paroi 92a, 92b, 92c, 92d », menant à des canaux, non représentés, pour acheminer « l'air primaire » dans une première terminologie, ou « air secondaire » dans une seconde terminologie, qui est l'air destiné à alimenter la réaction de combustion du combustible solide en régime. Enfin, la paroi 9 peut également être configurée pour permettre le passage d'une arrivée d'un « air secondaire » dans une première terminologie, ou « air tertiaire » dans une seconde terminologie, qui est l'air destiné à brûler les gaz issus de la combustion du combustible solide. En vue de réaliser cette double combustion, l'air secondaire doit être préchauffé et acheminé à l'aide de canaux, non représentés, dans la partie supérieure de la chambre de combustion. Le passage 93 représenté aux Figures 1 & 2 est destiné à l'admission de cet air secondaire dans la chambre de combustion. Tout au long du reste de ce texte, on utilisera la première terminologie pour qualifier les types d'air admis dans la chambre de combustion.

Le degré d'ouverture des premières ouvertures 91a, 91b, 91c est un facteur déterminant de la quantité d'air admise par unité de temps dans la chambre de combustion. Le degré d'ouverture est défini comme le ratio entre l'ouverture effective et l'ouverture maximale possible d'une ouverture de paroi. En vue de faire varier ce degré d'ouverture, un clapet 8 est positionné contre la face externe 9b de la paroi 9. Ce clapet comprend au moins une ouverture de clapet et est mobile en translation selon un axe Z parallèle à la face externe 9b. Aux Figures 1 et 3, le clapet comprend trois premières ouvertures 81a, 81b, 81c. Il comprend également deux axes 82 et 83 agencés pour coulisser dans des passages faisant saillies de la face externe 9b. La mobilité du clapet 8 selon l'axe Z permet de faire varier le chevauchement entre les ouvertures de clapet 81a, 81b, 81c et les ouvertures de paroi 91a, 91b, 91c et par conséquent le degré d'ouverture desdites ouvertures de paroi 91a, 91b, 91c. Le chevauchement entre une ouverture de paroi et une ouverture de clapet est défini comme le degré d'ouverture de ladite ouverture de paroi obtenu par superposition entre ladite ouverture et une ouverture de clapet.

Le clapet 8 est alors avantageusement configuré pour permettre de moduler le degré d'ouverture des ouvertures pour l'admission de l'air primaire et de l'air secondaire, en plus de l'air de grille. A cet effet, le clapet 8 peut comprendre une ouverture additionnelle 84 destinée au passage de l'air primaire. Par ailleurs, comme on peut le voir aux Figures 7-10, l'admission de l'air primaire dans les ouvertures 92a, 92c de la chambre de combustion, de même que celle de l'air secondaire dans le passage 93, peuvent être modulées suivant la position du clapet 8 selon l'axe Z. En raison l'étendue spatiale limitée du clapet 8 selon l'axe Z, le degré d'ouverture des ouvertures de parois 92a, 92c et du passage 93 est en effet également une fonction de la position du clapet 8 selon l'axe Z.

Comme représenté aux Figures 1 et 3-5, outre la paroi 8 et le clapet 9, le mécanisme selon l'invention comprend également un électroaimant 4 et une plaquette métallique 6 apte à être magnétisée. Ces éléments sont utilisés en vue de déplacer le clapet 8 pour ajuster le degré d'ouverture des différentes ouvertures de la paroi 9. A cet effet, l'un de l'électroaimant 4 et de la plaquette métallique 6 est une partie motorisée, et l'autre est une partie passive. La partie motorisée est apte à être déplacée en translation selon l'axe Z par rapport à la partie passive et à la paroi 9 de la chambre de combustion, par un moteur électrique couplé à la chambre de combustion. Au mode de réalisation représenté Figures 1 et 3-5, l'électroaimant 4 est la partie motorisée car elle est actionnée par un motor électrique 1, couplé mécaniquement à la paroi 9 à l'aide d'une pièce de fixation 3. Le moteur électrique 1 actionne en rotation un arbre fileté 2 qui lui-même actionne en translation un écrou 5 couplé mécaniquement à l'électroaimant 4. Cet arrangement permet donc de déplacer en translation l'électroaimant selon l'axe Z à l'aide du moteur électrique 1.

Dans ce mode de réalisation, la partie passive est donc constituée de la plaquette métallique 6 apte à être magnétisée. Cette partie passive est donc couplée mécaniquement au clapet 8 et est mobile en translation, selon une plage de positions le long de l'axe Z, par rapport à la paroi 9 de la chambre de combustion et à la partie motorisée. Dans d'autres modes de réalisation, l'électroaimant 4 et la plaquette métallique 6 peuvent être inversés, c'est-à-dire que la plaquette métallique peut être la partie motorisée et l'électroaimant la partie passive. En vue de permettre l'actionnement du clapet 8 par le moteur électrique 1, il est nécessaire de coupler mécaniquement la partie motorisée et la partie passive solidaire du clapet 8. Ce couplage mécanique est obtenu par attraction magnétique lorsqu'un courant circule dans l'électroaimant 4.

Des moyens résilients, tels que des ressorts hélicoïdaux 7a, 7b, sont cependant présents et exercent une force de répulsion entre la partie motorisée et la partie passive. Les moyens résilients 7a, 7b sont configurés pour maintenir la partie passive dans une position de sécurité dans laquelle il n'y a pas de chevauchement entre l'au moins une ouverture de clapet 81a, 81b, 81c et ladite au moins une ouverture de paroi 91a, 91b, 91c, et ce quelle que soit la position de la partie motorisée selon l'axe Z. Pour des raisons de sécurité, il est en effet avantageux que les ouvertures de paroi 91a, 91b, 91c se ferment si l'alimentation en courant électrique du mécanisme est interrompue. Cette caractéristique est obtenue par la présence des moyens résilients 7a, 7b tendant à éloigner la partie passive de la partie motorisée, de manière à déplacer la partie passive, couplée au clapet 8 donc, vers une position dans laquelle les ouvertures de paroi 91a, 91b, 91c sont fermées. Dans cette position, les ouvertures de paroi 92a, 92b, 92c, 92d pour l'admission de l'air primaire sont également avantageusement fermées. Cette position de sécurité du clapet 8 est représentée à la Figure 11.

A la Figure 1, les moyens résilients comprennent donc deux ressorts hélicoïdaux 7a, 7b. Ces ressorts 7a, 7b sont comprimés lorsque l'électroaimant 4 est couplé à la plaquette métallique 6 par attraction magnétique. En cas d'interruption du courant dans l'électroaimant 4, la force exercée par les ressorts hélicoïdaux 7a, 7b induit un déplacement de la plaquette métallique 6, et donc du clapet 8 couplé à cette dernière, dans la direction positive de l'axe Z. Ce déplacement du clapet 8 sous l'action des ressorts 7a, 7b se fait jusqu'à une position selon l'axe Z à laquelle les ouvertures de paroi 91a, 91b, 91c pour l'admission de l'air de grille, et avantageusement les ouvertures de paroi 92a, 92b, 92c, 92d pour l'air primaire, sont fermées. Dans un mode de réalisation alternatif, des pièces mécaniques additionnelles peuvent être intégrées au mécanisme et les moyens résilients peuvent par exemple être configurés pour être en extension lorsque l'électroaimant 4 est couplé à la plaquette métallique 6 par attraction magnétique. Dans cette configuration, c'est la contraction des ressorts pour retourner à leur position naturelle, lorsque le courant dans l'électroaimant 4 est interrompu, qui génère un déplacement du clapet 8 vers sa position de sécurité. Dans tous les cas, les moyens résilients doivent être configurés pour générer un déplacement suffisant de la partie passive, et donc du clapet 8, pour que la position de sécurité soit atteinte quelle que soit la position de la partie motorisée selon l'axe Z, qui correspond donc à la position initiale du clapet 8 avant son découplage de la partie motorisée.

Par défaut, en l'absence de courant dans l'électroaimant 4, la partie passive et donc le clapet 8 sont dans leur position de sécurité. En vue de contrôler le chevauchement entre l'ouverture de paroi 91a, 91b, 91c et l'ouverture de clapet 81a, 81b, 81c à l'aide du moteur électrique 1, il est donc nécessaire de coupler l'électroaimant 4 à la plaquette métallique 6. Pour ce faire, la partie motorisée est déplacée contre les moyens résilients 7a, 7b vers la partie passive par le moteur électrique et l'électroaimant 4 est alimenté par un courant électrique pour réaliser son couplage la plaquette métallique 6 par attraction magnétique. Le moteur électrique 1 doit donc pouvoir délivrer un couple suffisant pour rapprocher l'électroaimant 4 et la plaquette métallique 6 dans la direction positive selon l'axe Z en s'opposant aux moyens résilients 7a, 7b qui effectuent un travail négatif lors de ce mouvement de rapprochement. Par ailleurs, lorsque la partie motorisée est déplacée vers la partie passive, cette dernière se déplace initialement dans la direction positive selon l'axe Z, en raison de la force qui lui est transmise par les moyens résilients 7a, 7b. La présence de moyens mécaniques limitant la course de la partie passive selon l'axe Z est donc nécessaire, en vue de garantir que la partie passive ne sorte pas de sa plage de positions le long de l'axe Z avant d'être couplée à la partie motorisée. Ces moyens mécaniques pour limiter la course de la partie passive peuvent par exemple inclure des ergots ou des saillies 82a, 83a sur les axes 82 et 83, qui viennent en butée contre des éléments mécaniques couplés à la chambre de combustion lorsque la partie passive atteint la valeur maximale de sa plage de positions selon l'axe Z.

Une fois l'électroaimant 4 et la plaquette métallique 6 en contact l'un de l'autre, il est nécessaire que l'attraction magnétique entre ces deux éléments soit suffisante pour les maintenir coupler l'un à l'autre. L'électroaimant 4 et la plaquette métallique 6 doivent être dimensionnés en conséquence, de même que le courant délivré à l'électroaimant 4 doit avoir une valeur suffisante pour obtenir son couplage avec la plaquette métallique 6. Une fois le couplage obtenu, le clapet 8 peut être déplacé selon l'axe Z par le moteur électrique 1 de manière à faire varier le chevauchement entre les ouvertures de paroi 91a, 91b, 91c et les ouvertures de clapet 81a, 81b, 81c.

Le courant électrique délivré au moteur 1 de même que celui délivré à l'électroaimant 6 sont contrôlés par un contrôleur électronique, non représenté sur les Figures. La fonction de ce contrôleur est donc d'actionner le moteur électrique 1 en vue faire varier le degré d'ouverture des différentes ouvertures de paroi pour réguler l'admission d'air à dans la chambre de combustion. Le contrôleur est par ailleurs configuré pour mettre en œuvre un mode d'initialisation du mécanisme d'admission d'air dans lequel la partie motorisée est déplacée par le moteur électrique 1 vers la partie passive contre les moyens résilients 7a, 7b et l'électroaimant est alimenté en courant 4, de manière à réaliser le couplage mécanique entre la partie motorisée et la partie passive.

Le contrôleur électronique peut actionner le moteur électrique 1 en fonction de différents paramètres de fonctionnement. Les paramètres de fonctionnement peuvent être pré-enregistrés dans le contrôleur électronique. Ils peuvent également être reçus en provenance de capteurs ou d'une interface homme-machine connectée au contrôleur électronique. Suivant un mode de réalisation avantageux, le contrôleur électronique est un contrôleur PID. Le contrôleur PID est alors avantageusement configuré pour recevoir en entrée une température de consigne provenant d'une interface homme-machine, des données provenant d'un capteur de température dans la chambre de combustion et des données provenant d'un capteur détectant les états d'ouverture et de fermeture d'une porte de la chambre de combustion. Ce capteur est avantageusement utilisé pour le calcul du terme I par le contrôleur PID, qui varie alors dans le temps suivant un cycle qui se répète à chaque ouverture et/ou fermeture de porte. Un tel évènement est en effet pris en compte par l'algorithme de contrôle comme un évènement potentiel d'ajout de combustible solide dans la chambre de combustion.

La Figure 6 représente le degré d'ouverture des différents des différentes ouvertures de paroi suivant la position du clapet pour un mécanisme selon l'invention tel que représenté à la Figure 1. Sur ce graphe, on peut voir que le chevauchement entre les ouvertures de paroi 91a, 91b, 91c, pour l'admission d'air de grille, et les premières ouvertures de clapet 81a, 81b, 81c est une fonction monotone de la position du clapet 8 le long de l'axe Z par rapport à la paroi 9 de chambre de combustion. Lors du déplacement du clapet 8 dans la direction positive selon l'axe Z, la fonction passe d'une valeur de chevauchement maximal à une valeur nulle sur une première plage de positions, s'étendant de la position I à la position II, du clapet le long de l'axe Z. Les positions I et II du clapet sont représentées aux Figures 7 et 8.

Le chevauchement entre les secondes ouvertures de paroi 92b, 92d, pour l'admission d'air primaire, et la seconde ouverture de clapet 84 est également une fonction monotone de la position du clapet 8 le long de l'axe Z par rapport à la paroi 9 de chambre de combustion. Lors du déplacement du clapet 8 dans la direction positive selon l'axe Z, la fonction passe d'une valeur de chevauchement maximal à une valeur nulle sur une deuxième plage de positions, s'étendant de la position II à la position IV, du clapet le long de l'axe Z. La position IV est représentée à la Figure 10, tandis qu'une position du clapet 8 intermédiaire entre la position II et la position IV, la position III, est représentée à la Figure 9.

Comme représentée à la Figure 6, en raison de la chronologie des cycles de combustion, il est avantageux de configurer le clapet 8 et la paroi 9 de manière à ce que la première plage (I-II) de positions selon l'axe Z ne chevauche pas la deuxième (II-IV). Par ailleurs, dans la position de sécurité du clapet 8, correspondant à la position Z max sur le graphe de la Figure 6, on constate que le degré d'ouverture des premières et secondes ouvertures est égal à zéro car il n'y a pas de chevauchement entre les ouvertures de paroi 91a, 91b, 91c, 92a, 92b, 92c, 92d et les ouvertures de clapet 81a, 81b, 81c, 81d, 84.

La Figure 6 montre également le clapet 8 peut être configuré de telle manière que le degré d'ouverture du passage 93 pour l'admission de l'air de secondaire soit une fonction monotone de la position du clapet 8 le long de l'axe Z par rapport à la paroi 9 de chambre de combustion. La fonction passe d'une valeur d'ouverture minimale à une valeur d'ouverture maximale sur une troisième plage de positions (I-IV) du clapet le long de l'axe Z. Cette troisième plage de positions (I-IV) englobe avantageusement les première et seconde plages de positions. Par ailleurs, en position de sécurité, on constate que le degré d'ouverture du passage 93 est à sa valeur maximale.

La Figure 11 montre la configuration du clapet 8 lorsqu'il est dans sa position de sécurité, l'électroaimant 4 étant découplé de la platine métallique 6 et les ressorts hélicoïdaux 7a et 7b étant détendus. Dans cette configuration, le clapet 8 est donc dans une position selon l'axe Z similaire à celle de la Figure 10 (position IV). A la Figure 11, l'électroaimant 4 est quant à lui dans une position selon l'axe Z similaire à celle de la Figure 7 (position I). On peut donc en déduire qu'avant d'entrer en position de sécurité, le mécanisme représenté à la Figure 11 était dans la configuration de la Figure 7 (position I).

## Revendications

1. Mécanisme d'admission d'air pour la chambre de combustion d'un brûleur de combustible solide à tirage naturel, tel qu'un foyer à bois ou un poêle à bois, comprenant :
- une paroi (9), qui en position de montage fait partie de la chambre de combustion, comprenant une face interne (9a) et une face externe (9b), ladite paroi de chambre de combustion comprenant (9) au moins une ouverture de paroi (91a, 91b, 91c, 92a, 92b, 92c, 92d);
- un clapet (8) pour la fermeture de ladite paroi (9) de chambre de combustion, ledit clapet (8) comprenant au moins une ouverture de clapet (81a, 81b, 81c, 84) et étant positionné contre la face externe (9b) de ladite paroi de chambre de combustion (9), ledit clapet (8) étant mobile en translation selon un axe Z parallèle à ladite face externe (9b) de manière à faire varier le chevauchement entre l'ouverture de clapet (81a, 81b, 81c, 84) et l'ouverture de paroi (91a, 91b, 91c, 92a, 92b, 92c, 92d);
- un moteur électrique (1) pour déplacer le clapet (8) selon l'axe Z et faire varier le chevauchement entre la au moins une ouverture de clapet (81a, 81b, 81c, 84) et la au moins une ouverture de paroi (91a, 91b, 91c, 92a, 92b, 92c, 92d) ;
- un contrôleur électronique, ledit contrôleur électronique étant connecté opérationnellement audit moteur électrique (1);
**caractérisé en ce que** le mécanisme d'admission d'air comprend :
- un électroaimant (4) ;
- une plaquette métallique (6) ;
**et en ce que**
(i) l'un de l'électroaimant (4) et de la plaquette métallique (6) est une partie motorisée et l'autre est une partie passive, la partie motorisée étant apte à être déplacée en translation selon l'axe Z par rapport à la partie passive et à la paroi (9) de la chambre de combustion, par ledit moteur électrique (1) couplé mécaniquement à la paroi (9) de la chambre de combustion;
(ii) la partie passive est mobile en translation selon une plage de positions le long de l'axe Z par rapport à la paroi (9) de la chambre de combustion et à la partie motorisée, la partie passive étant mécaniquement couplée audit clapet (8) ;
(iii) des moyens résilients (7a, 7b) exerçant une force de répulsion selon l'axe Z entre la partie motorisée et la partie passive sont présents, lesdits moyens résilients (7a, 7b) étant configurés pour, en l'absence de courant dans l'électroaimant (4), maintenir la partie passive dans une position de sécurité dans laquelle il n'y a pas de chevauchement entre l'au moins une ouverture de clapet (81a, 81b, 81c, 84) et ladite au moins une première ouverture de paroi (91a, 91b, 91c, 92a, 92b, 92c, 92d), quelle que soit la position de la partie motorisée selon l'axe Z;
(iv) la partie passive peut être mécaniquement couplée à la partie motorisée par attraction magnétique lorsque la partie motorisée est déplacée contre les moyens résilients (7) vers la partie passive par le moteur électrique et qu'un courant circule dans l'électroaimant (4), de manière à ce qu'après le couplage mécanique entre la partie passive et la partie motorisée, le chevauchement entre l'au moins une ouverture de paroi (91a, 91b, 91c, 92a, 92b, 92c, 92d) et l'au moins une ouverture de clapet (81a, 81b, 81c, 84) peut être varié sous l'action du moteur électrique (1) ;
(v) ledit contrôleur électronique est connecté opérationnellement à l'électroaimant (4), ledit contrôleur étant configuré pour mettre en œuvre un mode d'initialisation du mécanisme d'admission d'air dans lequel la partie motorisée est déplacée par le moteur électrique (10) vers la partie passive contre les moyens résilients (7) et l'électroaimant est simultanément alimenté en courant (4), de manière à réaliser le couplage mécanique entre la partie motorisée et la partie passive.

2. Mécanisme d'admission d'air selon la revendication 1 dans lequel ladite paroi (9) de chambre de combustion comprend au moins une première ouverture de paroi (91a, 91b, 91c) pour l'admission d'air de grille et au moins une seconde ouverture de paroi (92a, 92b, 92c, 92d) pour l'admission d'air primaire, ledit clapet comprenant au moins une première ouverture de clapet (81a, 81b, 81c) et au moins une seconde ouverture de clapet (84), dans lequel
(i) le chevauchement entre ladite première ouverture de paroi (91a, 91b, 91c) et ladite première ouverture de clapet (81a, 81b, 81c) est une fonction monotone de la position du clapet (8) le long de l'axe Z par rapport à la paroi (9) de chambre de combustion, ladite fonction variant entre une valeur de chevauchement maximal et une valeur nulle, ladite fonction passant de ladite valeur de chevauchement maximal à la valeur nulle sur une première plage de positions (I-II) du clapet le long de l'axe Z,
(ii) le chevauchement entre ladite seconde ouverture de paroi (92a, 92b, 92c) et ladite seconde ouverture de clapet (84) est une fonction monotone de la position du clapet (8) le long de l'axe Z par rapport à la paroi (9) de chambre de combustion, ladite fonction variant entre une valeur de chevauchement maximal et une valeur nulle, ladite fonction passant de ladite valeur de chevauchement maximal à la valeur nulle sur une seconde plage de positions (II-IV) du clapet le long de l'axe Z,
(iii) ladite première et ladite seconde plage de positions ne se chevauchent pas,
(iv) en position de sécurité, il n'y a pas de chevauchement entre les ouvertures de paroi (91a, 91b, 91c, 92a, 92b, 92c, 92d) et les ouvertures de clapet (81a, 81b, 81c, 84).

3. Mécanisme d'admission d'air selon l'une quelconque des revendications précédentes dans lequel ladite paroi (9) de chambre de combustion comprend un passage (93) pour l'admission d'air secondaire, dans lequel
(i) le clapet (8) est configuré de telle manière que le degré d'ouverture dudit passage (93) est une fonction monotone de la position du clapet (8) le long de l'axe Z par rapport à la paroi (9) de chambre de combustion, ladite fonction variant entre une valeur d'ouverture minimale et une valeur d'ouverture maximale, ladite fonction passant de ladite valeur d'ouverture minimale à la valeur maximale sur une troisième plage de positions (I-IV) du clapet le long de l'axe Z, ladite troisième plage de positions (I-IV) englobant lesdites première et seconde plages de positions,
(ii) en position de sécurité, le degré d'ouverture dudit passage (93) est à sa valeur maximale.

4. Mécanisme d'admission d'air selon l'une quelconque des revendications précédentes dans lequel la paroi (9) de la chambre de combustion comprend une pluralité de premières ouvertures de paroi (91a, 91b, 91c) pour l'admission d'air de grille et le clapet comprend une pluralité de premières ouvertures de clapet (81a, 81b, 81c), dans lequel le chevauchement mutuel entre lesdites ouvertures de paroi (91a, 91b, 91c) et lesdites ouvertures de clapet (81a, 81b, 81c) peut être varié par un mouvement de translation du clapet (8) selon l'axe Z.

5. Mécanisme d'admission d'air selon l'une quelconque des revendications précédentes, dans lequel le contrôleur électronique actionne le moteur électrique pour réguler l'admission d'air à travers le mécanisme d'admission d'air en fonction de paramètres de fonctionnement, lesdits paramètres de fonctionnement étant (i) pré-enregistrés dans ledit contrôleur électronique et/ou (ii) reçus en entrée de capteurs connectés audit contrôleur électronique et/ou d'une interface homme-machine dudit contrôleur électronique.

6. Mécanisme d'admission d'air selon la revendication 5 dans lequel le contrôleur électronique est un contrôleur PID recevant en entrée une température de consigne provenant d'une interface homme-machine, des données provenant d'un capteur de température dans la chambre de combustion et des données provenant d'un capteur détectant les états d'ouverture et de fermeture d'une porte de la chambre de combustion.

7. Mécanisme d'admission d'air selon l'une quelconque des revendications précédentes dans lequel le moteur électrique (1) est configuré pour entrainer en rotation un arbre fileté (2), ladite partie motorisée comprenant un écrou (5) vissé autour dudit arbre fileté (2).

8. Mécanisme d'admission d'air selon l'une quelconque des revendications précédentes, dans lequel lesdits moyens résilients comprennent deux ressorts hélicoïdaux (7a, 7b) configurés pour fonctionner en compression lorsque ladite partie motorisée est déplacée vers ladite partie passive.

9. Mécanisme d'admission d'air selon l'une quelconque des revendications précédentes, dans lequel l'électroaimant (4) est la partie entraînée par moteur et la plaquette métallique (6) est la partie passive.

10. Chambre de combustion d'un brûleur de combustible solide à tirage naturel, tel qu'un foyer à bois ou un poêle à bois, comprenant un mécanisme d'admission d'air selon l'une quelconque des revendications précédentes.

## Patentansprüche

1. Lufteinlassmechanismus für die Brennkammer eines Festbrennstoffbrenners mit natürlichem Zug, wie etwa eines Holzkamins oder eines Holzofens, umfassend:
- eine Wand (9), welche in einer Montageposition Teil der Brennkammer ist, wobei sie eine Innenseite (9a) und eine Außenseite (9b) umfasst, wobei die Brennkammerwand (9) wenigstens eine Wandöffnung (91a, 91b, 91c, 92a, 92b, 92c, 92d) umfasst;
- eine Klappe (8) zum Schließen der Brennkammerwand (9), wobei die Klappe (8) wenigstens eine Klappenöffnung (81a, 81b, 81c, 84) umfasst und an der Außenseite (9b) der Brennkammerwand (9) anliegend positioniert ist, wobei die Klappe (8) entlang einer zu der Außenseite (9b) parallelen Achse Z so translatorisch bewegbar ist, dass ein Variieren der Überlappung zwischen der Klappenöffnung (81a, 81b, 81c, 84) und der Wandöffnung (91a, 91b, 91c, 92a, 92b, 92c, 92d) bewirkt wird;
- einen Elektromotor (1) zum Verschieben der Klappe (8) entlang der Achse Z und Bewirken des Variierens der Überlappung zwischen der wenigstens einen Klappenöffnung (81a, 81b, 81c, 84) und der wenigstens einen Wandöffnung (91a, 91b, 91c, 92a, 92b, 92c, 92d);
- eine elektronische Steuereinheit, wobei die elektronische Steuereinheit mit dem Elektromotor (1) in Wirkverbindung steht;
**dadurch gekennzeichnet, dass** der Lufteinlassmechanismus umfasst:
- einen Elektromagneten (4);
- ein Metallplättchen (6);
und dadurch, dass
(i) eines von dem Elektromagneten (4) und dem Metallplättchen (6) ein motorisierter Teil ist und das andere ein passiver Teil ist, wobei der motorisierte Teil durch den Elektromotor (1), der mit der Wand (9) der Brennkammer mechanisch gekoppelt ist, translatorisch verschiebbar entlang der Achse Z in Bezug auf den passiven Teil und auf die Wand (9) der Brennkammer ist;
(ii) der passive Teil translatorisch bewegbar über einen Bereich von Positionen entlang der Achse Z in Bezug auf die Wand (9) der Brennkammer und auf den motorisierten Teil ist, wobei der passive Teil mit der Klappe (8) mechanisch gekoppelt ist;
(iii) elastische Mittel (7a, 7b) vorhanden sind, die eine Rückstoßkraft entlang der Achse Z zwischen dem motorisierten Teil und dem passiven Teil ausüben, wobei die elastischen Mittel (7a, 7b) dafür ausgelegt sind, wenn kein Strom im Elektromagneten (4) vorhanden ist, den passiven Teil in einer Sicherheitsposition zu halten, in welcher keine Überlappung zwischen der wenigstens einen Klappenöffnung (81a, 81b, 81c, 84) und der wenigstens einen Wandöffnung (91a, 91b, 91c, 92a, 92b, 92c, 92d) vorhanden ist, gleichgültig, in welcher Position entlang der Achse Z sich der motorisierte Teil befindet;
(iv) der passive Teil mit dem motorisierten Teil durch magnetische Anziehung mechanisch gekoppelt werden kann, wenn der motorisierte Teil durch den Elektromotor gegen die elastischen Mittel (7) zum passiven Teil hin verschoben wird und wenn ein Strom in dem Elektromagneten (4) fließt, so dass nach der mechanischen Kopplung zwischen dem passiven Teil und dem motorisierten Teil die Überlappung zwischen der wenigstens einen Wandöffnung (91a, 91b, 91c, 92a, 92b, 92c, 92d) und der wenigstens einen Klappenöffnung (81a, 81b, 81c, 84) unter der Wirkung des Elektromotors (1) variiert werden kann;
(v) die elektronische Steuereinheit mit dem Elektromagneten (4) in Wirkverbindung steht, wobei die Steuereinheit dafür ausgelegt ist, einen Initialisierungsmodus des Lufteinlassmechanismus zu bewirken, in welchem der motorisierte Teil durch den Elektromotor (10) zu dem passiven Teil hin gegen die elastischen Mittel (7) bewegt wird und der Elektromagnet (4) gleichzeitig mit Strom versorgt wird, um so die mechanische Kopplung zwischen dem motorisierten Teil und dem passiven Teil durchzuführen.

2. Lufteinlassmechanismus nach Anspruch 1, wobei die Brennkammerwand (9) wenigstens eine erste Wandöffnung (91a, 91b, 91c) für den Einlass von Rostluft und wenigstens eine zweite Wandöffnung (92a, 92b, 92c, 92d) für den Einlass von Primärluft umfasst, wobei die Klappe wenigstens eine erste Klappenöffnung (81a, 81b, 81c) und wenigstens eine zweite Klappenöffnung (84) umfasst, wobei
(i) die Überlappung zwischen der ersten Wandöffnung (91a, 91b, 91c) und der ersten Klappenöffnung (81a, 81b, 81c) eine monotone Funktion der Position der Klappe (8) entlang der Achse Z in Bezug auf die Brennkammerwand (9) ist, wobei diese Funktion zwischen einem Wert maximaler Überlappung und einem Wert null variiert, wobei diese Funktion von dem Wert maximaler Überlappung zum Wert null über einen ersten Bereich von Positionen (I-II) der Klappe entlang der Achse Z verläuft,
(ii) die Überlappung zwischen der zweiten Wandöffnung (92a, 92b, 92c) und der zweiten Klappenöffnung (84) eine monotone Funktion der Position der Klappe (8) entlang der Achse Z in Bezug auf die Brennkammerwand (9) ist, wobei diese Funktion zwischen einem Wert maximaler Überlappung und einem Wert null variiert, wobei diese Funktion von dem Wert maximaler Überlappung zum Wert null über einen zweiten Bereich von Positionen (II-IV) der Klappe entlang der Achse Z verläuft,
(iii) der erste und der zweite Bereich von Positionen sich nicht überlappen,
(iv) in der Sicherheitsposition keine Überlappung zwischen den Wandöffnungen (91a, 91b, 91c, 92a, 92b, 92c, 92d) und den Klappenöffnungen (81a, 81b, 81c, 84) vorhanden ist.

3. Lufteinlassmechanismus nach einem der vorhergehenden Ansprüche, wobei die Brennkammerwand (9) einen Durchlass (93) für den Einlass von Sekundärluft umfasst, wobei
(i) die Klappe (8) so gestaltet ist, dass der Öffnungsgrad des Durchlasses (93) eine monotone Funktion der Position der Klappe (8) entlang der Achse Z in Bezug auf die Brennkammerwand (9) ist, wobei diese Funktion zwischen einem Wert minimaler Öffnung und einem Wert maximaler Öffnung variiert, wobei diese Funktion von dem Wert minimaler Öffnung zum Wert maximaler Öffnung über einen dritten Bereich von Positionen (I-IV) der Klappe entlang der Achse Z verläuft, wobei der dritte Bereich von Positionen (I-IV) den ersten und den zweiten Bereich von Positionen einschließt,
(ii) in der Sicherheitsposition der Öffnungsgrad des Durchlasses (93) seinen maximalen Wert hat.

4. Lufteinlassmechanismus nach einem der vorhergehenden Ansprüche, wobei die Wand (9) der Brennkammer mehrere erste Wandöffnungen (91a, 91b, 91c) für den Einlass von Rostluft umfasst und die Klappe mehrere erste Klappenöffnungen (81a, 81b, 81c) umfasst, wobei die gegenseitige Überlappung zwischen den Wandöffnungen (91a, 91b, 91c) und den Klappenöffnungen (81a, 81b, 81c) durch eine Translationsbewegung der Klappe (8) entlang der Achse Z variiert werden kann.

5. Lufteinlassmechanismus nach einem der vorhergehenden Ansprüche, wobei die elektronische Steuereinheit den Elektromotor betätigt, um den Lufteinlass durch den Lufteinlassmechanismus in Abhängigkeit von Betriebsparametern zu regeln, wobei die Betriebsparameter (i) in der elektronischen Steuereinheit im Voraus gespeichert sind und/oder (ii) als Eingangsgrößen von Sensoren, die mit der elektronischen Steuereinheit verbunden sind, und/oder von einer Mensch-Maschine-Schnittstelle der elektronischen Steuereinheit kommend empfangen werden.

6. Lufteinlassmechanismus nach Anspruch 5, wobei die elektronische Steuereinheit ein PID-Regler ist, der als Eingangsgrößen eine von einer Mensch-Maschine-Schnittstelle kommende Solltemperatur, von einem Temperatursensor in der Brennkammer kommende Daten und von einem den Öffnungs- und den Schließzustand einer Tür der Brennkammer detektierenden Sensor kommende Daten empfängt.

7. Lufteinlassmechanismus nach einem der vorhergehenden Ansprüche, wobei der Elektromotor (1) dafür ausgelegt ist, eine Gewindespindel (2) drehend anzutreiben, wobei der motorisierte Teil eine Mutter (5) umfasst, die auf die Gewindespindel (2) geschraubt ist.

8. Lufteinlassmechanismus nach einem der vorhergehenden Ansprüche, wobei die elastischen Mittel zwei Schraubenfedern (7a, 7b) umfassen, die dafür ausgelegt sind, als Druckfedern zu wirken, wenn der motorisierte Teil zu dem passiven Teil hin bewegt wird.

9. Lufteinlassmechanismus nach einem der vorhergehenden Ansprüche, wobei der Elektromagnet (4) der von dem Motor angetriebene Teil ist und das Metallplättchen (6) der passive Teil ist.

10. Brennkammer eines Festbrennstoffbrenners mit natürlichem Zug, wie etwa eines Holzkamins oder eines Holzofens, welche einen Lufteinlassmechanismus nach einem der vorhergehenden Ansprüche umfasst.

## Claims

1. Air intake mechanism for the combustion chamber of a natural-draft solid-fuel burner such as a wood-burning fireplace or wood-burning stove, comprising:
- a wall (9) which, in the mounted position, forms part of the combustion chamber, comprising an internal face (9a) and an external face (9b), said combustion chamber wall (9) comprising at least one wall opening (91a, 91b, 91c, 92a, 92b, 92c, 92d);
- a shutter (8) for closing said combustion chamber wall (9), said shutter (8) comprising at least one shutter opening (81a, 81b, 81c, 84) and being positioned against the external face (9b) of said combustion chamber wall (9), said shutter (8) being capable of translational movement along an axis Z parallel to said external face (9b) so as to cause the amount of overlap between the shutter opening (81a, 81b, 81c, 84) and the wall opening (91a, 91b, 91c, 92a, 92b, 92c, 92d) to vary;
- an electric motor (1) for moving the shutter (8) along the axis Z and causing the amount of overlap between the at least one shutter opening (81a, 81b, 81c, 84) and the at least one wall opening (91a, 91b, 91c, 92a, 92b, 92c, 92d) to vary;
- an electronic controller, said electronic controller being operationally connected to said electric motor (1);
**characterized in that** the air intake mechanism comprises:
- an electromagnet (4);
- a metallic plate (6);
**and in that**
(i) of the electromagnet (4) and the metallic plate (6) one is a motorized part and the other is a passive part, the motorized part being able to be moved translationally along the axis Z with respect to the passive part and with respect to the combustion chamber wall (9) by said electric motor (1) mechanically coupled to the combustion chamber wall (9);
(ii) the passive part is able to move translationally into a range of positions along the axis Z with respect to the combustion chamber wall (9) and with respect to the motorized part, the passive part being mechanically coupled to said shutter (8);
(iii) resilient means (7a, 7b) that apply a force of repulsion along the axis Z between the motorized part and the passive part are present, said resilient means (7a, 7b) being configured so as, in the absence of current in the electromagnet (4), to keep the passive part in a safe position in which there is no overlap between the at least one shutter opening (81a, 81b, 81c, 84) and said at least one first wall opening (91a, 91b, 91c, 92a, 92b, 92c, 92d) whatever the position of the motorized part along the axis Z;
(iv) the passive part may be mechanically coupled to the motorized part by magnetic attraction when the motorized part is moved against the action of the resilient means (7) towards the passive part by the electric motor and when current is flowing in the electromagnet (4), so that, after mechanical coupling between the passive part and the motorized part, the overlap between the at least one wall opening (91a, 91b, 91c, 92a, 92b, 92c, 92d) and the at least one shutter opening (81a, 81b, 81c, 84) can be varied under the action of the electric motor (1);
(v) said electronic controller is operationally connected to the electromagnet (4), said controller being configured to implement a mode of initializing the air intake mechanism in which mode the motorized part is moved by the electric motor (10) towards the passive part against the action of the resilient means (7) and the electromagnet is simultaneously supplied with current (4) so as to perform the mechanical coupling between the motorized part and the passive part.

2. Air intake mechanism according to Claim 1, wherein said combustion chamber wall (9) comprises at least a first wall opening (91a, 91b, 91c) for admitting grate air and at least a second wall opening (92a, 92b, 92c, 92d) for admitting primary air, said shutter comprising at least a first shutter opening (81a, 81b, 81c) and at least a second shutter opening (84), wherein
(i) the overlap between said first wall opening (91a, 91b, 91c) and said first shutter opening (81a, 81b, 81c) is a monotonic function of the position of the shutter (8) along the axis Z with respect to the combustion chamber wall (9), said function varying between a maximum overlap value and a zero value, said function passing from said maximum overlap value to the zero value over a first range of positions (I-II) of the shutter along the axis Z,
(ii) the overlap between said second wall opening (92a, 92b, 92c) and said second shutter opening (84) is a monotonic function of the position of the shutter (8) along the axis Z with respect to the combustion chamber wall (9), said function varying between a maximum overlap value and a zero value, said function passing from said maximum overlap value to the zero value over a second range of positions (II-IV) of the shutter along the axis Z,
(iii) said first and said second range of positions do not overlap,
(iv) in the safe position, there is no overlap between the wall openings (91a, 91b, 91c, 92a, 92b, 92c, 92d) and the shutter openings (81a, 81b, 81c, 84).

3. Air intake mechanism according to either one of the preceding claims, wherein said combustion chamber wall (9) comprises a passage (93) for admitting secondary air, wherein
(i) the shutter (8) is configured in such a way that the degree of opening of said passage (93) is a monotonic function of the position of the shutter (8) along the axis Z with respect to the combustion chamber wall (9), said function varying between a minimum opening value and a maximum opening value, said function passing from said minimum opening value to the maximum value over a third range of positions (I-IV) of the shutter along the axis Z, said third range of positions (I-IV) encompassing said first and second ranges of positions,
(ii) in the safe position, the degree of opening of said passage (93) is at its maximum value.

4. Air intake mechanism according to any one of the preceding claims, wherein the combustion chamber wall (9) comprises a plurality of first wall openings (91a, 91b, 91c) for admitting grate air and the shutter comprises a plurality of first shutter openings (81a, 81b, 81c), wherein the mutual overlap between said wall openings (91a, 91b, 91c) and said shutter openings (81a, 81b, 81c) can be varied via a translational movement of the shutter (8) along the axis Z.

5. Air intake mechanism according to any one of the preceding claims, wherein the electronic controller actuates the electric motor to regulate the admission of air through the air intake mechanism according to operating parameters, said operating parameters being (i) prerecorded in said electronic controller and/or (ii) received as input from sensors connected to said electronic controller and/or from a human-machine interface of said electronic controller.

6. Air intake mechanism according to Claim 5, wherein the electronic controller is a PID controller receiving as input a setpoint temperature coming from a human-machine interface, data coming from a temperature sensor in the combustion chamber and data coming from a sensor that detects the state of openness and of closure of a door of the combustion chamber.

7. Air intake mechanism according to any one of the preceding claims, wherein the electric motor (1) is configured to drive the rotation of a threaded shaft (2), said motorized part comprising a nut (5) screwed around said threaded shaft (2).

8. Air intake mechanism according to any one of the preceding claims, wherein said resilient means comprise two helical springs (7a, 7b) configured to operate in compression when said motorized part is moved towards said passive part.

9. Air intake mechanism according to any one of the preceding claims, wherein the electromagnet (4) is the part driven by the motor and the metallic plate (6) is the passive part.

10. Combustion chamber of a natural-draft solid-fuel burner, such as a wood-burning fireplace or a wood-burning stove, comprising an air intake mechanism according to any one of the preceding claims.
